(19) Europäisches Patentamt / European Patent Office / Office européen des brevets

(11) **EP 4 514 764 B1**

(12) **EUROPEAN PATENT SPECIFICATION**

(45) Date of publication and mention
of the grant of the patent:
**03.06.2026 Bulletin 2026/23**

(21) Application number: **23724554.3**

(22) Date of filing: **24.04.2023**

(51) International Patent Classification (IPC):
**C04B 28/00** $^{(2006.01)}$

(52) Cooperative Patent Classification (CPC):
(C-Sets available)
**C04B 28/006;** Y02P 40/10          (Cont.)

(86) International application number:
**PCT/US2023/019603**

(87) International publication number:
**WO 2023/211824 (02.11.2023 Gazette 2023/44)**

(54) **PLASTICIZER FOR GEOPOLYMERS AND METHOD FOR PLASTICIZING GEOPOLYMERS**

WEICHMACHER FÜR GEOPOLYMERE UND VERFAHREN ZUR WEICHMACHUNG VON GEOPOLYMEREN

PLASTIFIANT POUR GÉOPOLYMÈRES ET PROCÉDÉ DE PLASTIFICATION DE GÉOPOLYMÈRES

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.04.2022 US 202263335241 P**

(43) Date of publication of application:
**05.03.2025 Bulletin 2025/10**

(73) Proprietor: **Lubrizol Advanced Materials, Inc.
Cleveland, OH 44141-3247 (US)**

(72) Inventors:
• **BARTLETT, Nathan, J.
Belper Derbyshire DE56 1QN (GB)**
• **DERKANI, Maryam
Wirral Merseyside CH63 3JW (GB)**
• **WALKLEY, Brant
Sheffield South Yorkshire S1 3JD (GB)**

(74) Representative: **Evans, Sophie Elizabeth et al
Kilburn & Strode LLP
Lacon London
84 Theobalds Road
London WC1X 8NL (GB)**

(56) References cited:
**WO-A1-2020/191444     CA-A1- 3 040 162**

(52) Cooperative Patent Classification (CPC): (Cont.)

C-Sets
**C04B 28/006, C04B 7/12, C04B 14/042,
C04B 14/047, C04B 14/062, C04B 14/106,
C04B 14/14, C04B 18/10, C04B 18/101,**
**C04B 18/12, C04B 18/141, C04B 22/062,
C04B 22/10, C04B 22/106, C04B 24/2641;
C04B 28/006, C04B 14/062, C04B 14/106,
C04B 18/141, C04B 22/062, C04B 22/10,
C04B 22/106, C04B 2103/32**

**Description**

**BACKGROUND OF THE INVENTION**

Low calcium alkali activated materials, sometimes referred to as "geopolymers," are a class of cementitious materials that are used in a wide variety of applications. Geopolymers can be used to completely or partially replace traditionally used, Portland cement compositions as a cementitious binding ingredient in construction product formulations, such as mortars. The applications in which low calcium alkali activated materials can be used to replace Portland cements include in concretes, infrastructure (roads, runways, bridges and paving), cementitious repair materials, cementitious coatings (e.g. coating systems, floor screeds, passive fire protection coatings), grouts, and bonding mortars. Low calcium alkali activated materials may also be used in other applications such as those where articles are formed in controlled manufacturing conditions, such as bricks, blocks, tiles, sewerage pipes, waste immobilization, and load bearing reinforced articles (e.g. lintels). With the increasing use of 3D printing in construction, there is also interest in using low calcium alkali activated materials in 3D printed buildings.

For final geopolymers to maintain high strength and durability, it is important to maintain a low water content in the reactive composition while maintaining good flow and workability of the material. Plasticizing additives can be used to enhance flow and workability in the formulation, while maintaining desirable properties in the final composition.
CA 3 040 162 A1 describes, according to its abstract, the use of an additive, comprising at least one water-soluble polymer, which is a homo- or copolymer of at least one monoethylenically unsaturated carboxylic acid, and optionally at least one alkali silicate as a liquefier for geopolymers.
WO 2020/191444 A1 describes, according to its abstract, a geopolymer cement, comprising: a geopolymer binder; and a setting control composition comprising: a viscosity control agent, a polymeric binder, and a retarding additive. Also described, according to its abstract, is a geopolymer concrete comprising the geopolymer cement and aggregate material.

Therefore, it is desirable to provide a geopolymer composition which has improved processability for a long period without significant retardation of hardening or reduction of the strength of the final geopolymer composition.

**SUMMARY OF THE INVENTION**

The present invention provides a composition comprising (1) a reactive geopolymer mixture comprising (A) a reactive solid comprising an aluminosilicate and a calcium source, (B) an alkali activator, (C) a solvent comprising or consisting of water, and (2) a plasticizer additive comprising a water-soluble polymer which is a homopolymer or copolymer containing repeat units derived from methacrylic acid or salts thereof, methacrylate, or mixtures thereof. In one embodiment, the reactive geopolymer mixture comprises (A) a reactive solid comprising of an aluminosilicate and a calcium source, (B) an alkali activator derived from colloidal silica, (C) a solvent comprising or consisting of water, and the plasticizer additive is a water-soluble homopolymer or copolymer containing repeat units derived from methacrylic acid or salts thereof partially or fully neutralized with sodium, potassium or mixtures thereof. In one embodiment, the aluminosilicate comprises or consists of metakaolin. In another embodiment, the aluminosilicate is selected from the group consisting of metakaolin, calcined clay, fly ash, incineration ash (including but not limited to rice husk, sugarcane leaves ash, palm oil, boiler ash, wastepaper sludge ash, municipal solid waste ash, bottom ash), natural pozzolans, volcanic ash, ground granulated blast furnace slag (from steel or iron), other industrial ground slag (including but not limited to phosphorous, ferronickel, ferrochrome magnesia-iron, copper, nickel, titaniferous), mine tailings or wastes (including but not limited to coal gangue, red mud), zeolite, feldspars, framework aluminosilicates, synthetic glassy precursors (silicates, aluminates, aluminosilicates) and mixtures thereof. The calcium source may be any source of calcium oxide, such as blast furnace slag or hydrated lime.

The present invention also provides a method of plasticizing an aluminosilicate geopolymer precursor by combining a reactive aluminosilicate with an alkali activator and a plasticizing additive, wherein the plasticizing additive comprises a water-soluble polymer which is a homopolymer or copolymer containing repeat units derived from methacrylic acid or salts thereof, methacrylate, or mixtures thereof. In one embodiment, the method of plasticizing includes combining (1) a geopolymer precursor mixture comprising (A) a reactive solid comprising an aluminosilicate, such as metakaolin, and a calcium source, such as blast furnace slag, (B) an alkali activator derived from colloidal silica, (C) a solvent comprising or consisting of water, with (2) a water-soluble homopolymer or copolymer containing repeat units derived from methacrylic acid or salts thereof partially or fully neutralized with sodium, potassium or mixtures thereof.

The reactive geopolymer mixture (meaning the reactive sold, alkali activator, and any solvent contained or added therein, but excluding the water-soluble polymer component and any water contained therein) has an $H_2O/M_xO$ ratio of less than 7. In the calculation of the ratio, x is 2 for Lithium, Sodium, and Potassium, and x is 1 for Calcium. The $H_2O/M_xO$ ratio is calculated using the following formula

Total Moles of Free or Potentially Released Water in the Geopolymer Composition/(((Total Moles of Li, Na, and/or K)/2) + Total Moles of Ca).

The various embodiments will be described in more detail below in the following Detailed Description of the Invention.

## DETAILED DESCRIPTION OF THE INVENTION

Various preferred features and embodiments will be described below by way of nonlimiting illustration.

The amount of each chemical component described is presented exclusive of any solvent, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade.

It is known that some of the materials described above may interact in the final formulation, so that the components of the final formulation may be different from those that are initially added. For instance, the alkali activator reacts with the aluminosilicate to form a geopolymer. The products formed thereby, including the products formed upon employing the composition of the present invention in its intended use, may not be susceptible of easy description. The present invention encompasses the composition prepared by admixing the components described above.

### Reactive Solid

The reactive solid component of the present invention contains an aluminosilicate material. The aluminosilicate useful in the present invention may be derived from calcined clay, incineration ash, including but not limited to fly ash, rice husk ash, sugarcane leaves ash, palm oil ash, boiler ash, wastepaper sludge ash, municipal solid waste ash, bottom ash, natural pozzolans, volcanic ash, ground granulated blast furnace slag (from steel or iron), industrial ground slag, including but not limited to phosphorous, ferronickel, ferrochrome magnesia-iron, copper, nickel, titaniferous, mine tailings or wastes (including but not limited to coal gangue, red mud) zeolite, feldspars, and mixtures thereof. In one embodiment, the aluminosilicate comprises or consists of metakaolin. In another embodiment, the aluminosilicate comprises at least 10% or even at least 50% by weight metakaolin.

In one embodiment, the reactive solid also includes a source of calcium. The calcium source may comprise or consist of calcium oxide. In another embodiment, the calcium source may be from waste materials that have calcium oxide present. Such an embodiment includes a calcium source that comprises or consists of ground granulated blast furnace slag. In another embodiment, the calcium source may comprise or consist of hydrated lime.

### Alkali Activator

The composition of the present invention also employs an alkali activator. In one embodiment, the alkali activator comprises an alkali silicate. Useful alkali silicates are represented by the formula $M_{2n}SiO_{2+n}$ but may also be described as $(M_2O)_nSiO_2$ or $(M_2O)_nSiO_2.xH_2O$ or $M_{2n}SiO_{2+n}.xH_2O$. In these formulas, M represents an alkali metal, for example, sodium, lithium, or potassium, or mixtures thereof. In the formulas above, n may be from 0.33 to 1.33, for example, 0.43 to 0.73. In some embodiments, the alkali metal silicate will have a molar (or weight (wt.)) ratio of $SiO_2/M_2O$ (where M = Li, Na, K or mixtures thereof) of 3.0 to 0.75, or even 2.33 to 1.36.

Alkali silicate useful in the present invention may be selected from a variety of sodium, lithium, and/or potassium silicates or mixtures thereof. In one embodiment, the alkali silicate comprises or consists of sodium metasilicate. Examples of commercially available alkali silicates are available from various suppliers including PQ Corporation (US), Groupo IQE (Spain), ICL (UK), and Ankit (India). Alkali silicates useful for this invention are available commercially and are understood to have varying compositions by those skilled in the art. Many of these have non-integer stoichiometry. Their behavior is complex but is documented in the literature (e.g. Weldes and Lange. "Properties of Soluble Silicates," Industrial and Engineering Chemistry, Vol. 61, No. 4, April 1969).

In another embodiment, the alkali activator is derived from colloidal silica. In such an embodiment, the alkali silicate comprises the reaction product of colloidal silica with an alkali metal oxide, an alkali metal hydroxide, an alkali metal carbonate, an alkali metal bicarbonate, other alkali silicate or mixtures thereof. Colloidal silica is a suspension of fine amorphous, nonporous, and typically spherical silica particles in a liquid phase. Commercially available colloidal silicas contain about 10% to about 60% by weight $SiO_2$. In some embodiments, the $SiO_2$ particles are around 1 to 100 nm in size. In some embodiments, the colloidal silicas are negatively charged solutions stabilized by the addition of for example, $Na_2O$, NaOH, $NH_4OH$, at low treat rates such as from 0.025% to 1.5% of the total weight of the colloidal silica formulation. In other embodiments, the colloidal silicas are positively charged solutions stabilized by surface coatings of $Al_2O_3$, or mixtures of $Al_2O_3$ and Cl, at treat rates of 0.025% to 2.5% of the total weight of the colloidal silica formulation. Examples of commercially available colloidal silicas include those sold under the following trademarks: LUDOX® (E.I. duPont de Nemours & Co., Wilmington, Delaware), NALCOAG® (Nalco Chemical Co., Chicago, Illinois), NYACOL® (Nyacol, Inc., Ashland, Massachusetts), SNOWTEX® (Nissan Chemical Industries, Ltd., Tokyo, Japan), and SYTON® (Monsanto Ltd., London, England and St. Louis, Missouri). Alkali metal oxides, hydroxides, carbonates, bicarbonates, are well known in the art and include those based on sodium, lithium, or potassium.

Geopolymers are formed in the present invention by the reaction of the aluminosilicate and calcium oxide in the reactive solid mixture and the alkali silicate in the alkali activator, in the presence of solvent. The reactive geopolymer mixture (defined as the reactive solid, alkali activator, and any solvent contained or added therein, but excluding the water-soluble polymer component and any water contained therein) has an $H_2O/M_xO$ ratio of less than 7. In the calculation of the ratio, x is 2 for Lithium, Sodium, and Potassium, and x is 1 for Calcium. The $H_2O/M_xO$ ratio is calculated using the following formula: Total Moles of Free or Potentially Released Water in the Geopolymer Composition/(((Total Moles of Li, Na, and/or K)/2) + Total Moles of Ca).

## Solvent

The composition of the present invention also comprises one or more solvents. In one embodiment, the solvent comprises or consists of water. In another embodiment, the solvent comprises water and one or more co-solvents miscible with water. Such co-solvents may include, for example, alcohols such as C1-6 aliphatic alcohols such as ethanol, isopropanol, diacetone alcohol, glycols such as C2-6 alkylene glycols, alcohol ethers such as methoxy-, ethoxy-, propoxy- and butoxyethanol, methoxy-, ethoxy-, propoxy- and butoxypropanol, glycol ethers such as diethylene glycol and dipropylene glycol, glycol esters such as 2-ethoxyethyl acetate, 2-ethoxypropyl acetate, or polyglycols such as polyethyleneglycol, where the polyethylene glycol has a molecular weight of less than 600, tetrahydrofuran (THF), methyl THF, or 1,3-dioxolane or mixtures thereof.

It should be understood that in some embodiments, the solvent component for the present invention may be separately added to the other solid components of the invention. In other embodiments, the solvent may be included in one or more of the other components used in the invention, such as in the alkali activator component or as part of the plasticizing additive.

## Plasticizer Additive

The plasticizer additive of the present invention is a water-soluble polymer which is a homopolymer or copolymer containing repeat units derived from methacrylic acid or salts thereof, methacrylate, or mixtures thereof.

The water-soluble polymers useful in the present invention may be selected from those now known or hereafter developed. In one embodiment, the water-soluble polymer is a homopolymer or copolymer containing repeat units derived from methacrylic acid or salts thereof, methacrylate, or mixtures thereof. In another embodiment, the water-soluble polymer is a copolymer that comprises repeat units derived from methacrylate, methacrylic acid, salts of methacrylic acid, mixtures of methacrylate, methacrylic acid, and salts of methacrylic acid, and optionally, other monomers such acrylate, acrylic acid, alkyl (meth)acrylate, acrylate esters (e.g. ethyl, n-butyl etc.), vinyl chloride, vinylidene chloride, vinyl acetate, vinyl trimethoxysilane, styrene, styrene sulfonic acid, acrylamide, diacetone acrylamide, maleic acid, fumaric acid, and dienes such as butadiene or combinations thereof. In another embodiment, the water-soluble polymer comprises at least 50%, or at least 75%, at least 90%, or even at least 95% repeat units derived from methacrylic acid. In another embodiment, the water-soluble polymer consists of repeat units derived from methacrylic acid. In another embodiment, the water-soluble polymer is a salt of a polymer consisting of repeat units derived from methacrylic acid wholly or partially neutralized by, lithium, sodium, or potassium or mixtures thereof.

The water-soluble polymer useful in the present invention may have a weight average molecular weight measured by aqueous gas permeation chromatography (GPC) (Mw) greater than 1,000 up to 40,000. In one embodiment, the water-soluble polymer has a Mw from 1,000 to 35,000, or even, 2,000, or 3,000 up to 30,000. In another embodiment, the water-soluble polymer has a Mw of less than 30,000, for example 2,000 or 3,000 to 25,000 or 20,000 or even 3,000 to 10,000. In some embodiments, the water-soluble polymer useful in the present invention may have a Mw of 1,000, 2,000, 3,000, 4,000, 5,000, 6,000, 7,000, 8,000, 9,000 or 10,000.

The water-soluble polymers used in the present invention are usually provided as a solution of particles of polymers in a liquid substance. Typically, the liquid substance is water.

In some embodiments of the present invention, the plasticizing additive may be combined with the alkali activator in a manner provide a metastable colloidal solution that does not crystalize and thus, making a shelf-stable activating liquid component. Such an activating liquid component may also include one or more solvents including water.

In some embodiments, the composition of the present invention may include one or more additional additives.

These additional additives may be included as part of any individual component, as part of the reactive liquid composition, as part of a mixture with the reactive solid, or even added after the reactive solid, alkali activator, and plasticizer components are combined to form the composition. Examples of these additional additives are described below.

In some embodiments, the composition may further contain one or more additional polymers. The polymers may be included as solids or in the form of a solution or dispersion. These additional polymers can perform a variety of functions in the composition. However, the additional polymers are not a required component for the essential features of the disclosure.

The compositions of the present invention can further include one or more additives, including pigments, fillers, dispersants, coalescents, pH modifying agents, latex polymers, plasticizers, defoamers, surfactants, rheology modifiers or thickeners, humectants, flame retardants, surfactants, preservatives, biocides, corrosion inhibitors, co-solvents, and combinations thereof. The choice of additives in the composition will be influenced by a number of factors, including but not limited to the intended use of the composition.

Examples of suitable pigments include metal oxides, such as titanium dioxide, zinc oxide, iron oxide, or combinations thereof. In certain embodiments, the composition includes a titanium dioxide pigment. Examples of commercially available titanium dioxide pigments are KRONOS® 2101, KRONOS® 2310, available from Kronos World-Wide, Inc. (Cranbury, NJ), TI-PURE® R-900, available from DuPont (Wilmington, DE), or TIONA® AT1 commercially available from Millenium Inorganic Chemicals. Titanium dioxide is also available in concentrated dispersion form. An example of a titanium dioxide dispersion is KRONOS® 4311, also available from Kronos WorldWide, Inc.

Examples of suitable fillers include sand, calcium carbonate, nepheline syenite (25% nepheline, 55% sodium feldspar, and 20% potassium feldspar), feldspar (an aluminosilicate), diatomaceous earth, calcined diatomaceous earth, talc (hydrated magnesium silicate), silica (silicon dioxide), alumina (aluminum oxide), clay (hydrated aluminum silicate), kaolin (kaolinite, hydrated aluminum silicate), mica (hydrous aluminum potassium silicate), pyrophyllite (aluminum silicate hydroxide), perlite, baryte (barium sulfate), Wollastonite (calcium metasilicate), and combinations thereof. In certain embodiments, the composition comprises a calcium carbonate filler. In some embodiments, the fillers will be included in the reactive solid mixture portion of the composition. If included, the fillers may be present in amounts of up to 50% by weight of the reactive solid mixture. In cases where fillers are included, the amount of the aluminosilicate in the reactive solid mixture will be reduced to accommodate for the presence of the fillers. Other fillers may include reinforcing fibers, such as glass fibers, natural fibers, plastic fibers, steel fibers, carbon fibers, carbon nanotubes and the like now known or hereafter developed. In one embodiment of the invention, sand is used as a filler component. In another embodiment, the filler component is a standardized sand sieved by the method specified in ASTM C77820-30.

Suitable coalescents, which aid in film formation during drying, include ethylene glycol monomethyl ether, ethylene glycol monobutyl ether, ethylene glycol monoethyl ether acetate, ethylene glycol monobutyl ether acetate, diethylene glycol monobutyl ether, diethylene glycol monoethyl ether acetate, dipropylene glycol monomethyl ether, 2,2,4-trimethyl-1,3-pentanediol monoisobutyrate, and combinations thereof.

Examples of suitable rheology modifiers or thickening agents include hydrophobically modified ethylene oxide urethane (HEUR) polymers, hydrophobically modified alkali soluble emulsion (HASE) polymers, hydrophobically modified hydroxyethyl celluloses (HMHECs), hydrophobically modified polyacrylamide, and combinations thereof. HEUR polymers are linear reaction products of diisocyanates with polyethylene oxide end-capped with hydrophobic hydrocarbon groups. HASE polymers are homopolymers of (meth)acrylic acid, or copolymers of (meth)acrylic acid, (meth)acrylate esters, or maleic acid modified with hydrophobic vinyl monomers. HMHECs include hydroxyethyl cellulose modified with hydrophobic alkyl chains. Hydrophobically modified polyacrylamides include copolymers of acrylamide with acrylamide modified with hydrophobic alkyl chains (N-alkyl acrylamide). In certain embodiments, the composition includes a hydrophobically modified hydroxyethyl cellulose thickener.

Defoamers serve to minimize frothing during mixing and/or application of the composition. Suitable defoamers include silicone oil defoamers, such as polysiloxanes, polydimethylsiloxanes, polyether modified polysiloxanes, and combinations thereof. Exemplary silicone-based defoamers include BYK®-035, available from BYK USA Inc. (Wallingford, CT), the TEGO® series of defoamers, available from Evonik Industries (Hopewell, VA), and the DREWPLUS® series of defoamers, available from Ashland Inc. (Covington, KY). Other suitable defoamers include non-silicone defoamers or silicone free defoamers, such as oil based, or oil emulsions. Exemplary non-silicone defoamers include Efka™ 2526, Efka™ 2788 available from BASF SE, BYK™ 011 available from BYK USA Inc. (Wallingford, CT).

Suitable biocides can be incorporated to inhibit the growth of bacteria and other microbes in the composition during storage. Exemplary biocides include 2-[(hydroxymethyl)amino]ethanol, 2-[(hydroxymethyl) amino]2-methyl-1-propanol, o-phenylphenol, sodium salt, 1,2-benzisothiazolin-3-one, 2-methyl-4-isothiazolin-3-one (MIT), 5-chloro2-methyland-4-isothiazolin-3-one (CIT), 2-octyl-4-isothiazolin-3-one (OTT), 4,5-dichloro-2-n-octyl-3-isothiazolone, as well as acceptable salts and combinations thereof. Suitable biocides also include mildewcides that inhibit the growth mildew or its spores in the composition. Examples of mildewcides include 2-(thiocyanomethylthio)benzothiazole, 3-iodo-2-propynyl butyl carbamate, 2,4,5,6-tetrachloroisophthalonitrile, 2-(4-thiazolyl)benzimidazole, 2-N-octyl4-isothiazolin-3-one, diiodomethyl p-tolyl sulfone, as well as acceptable salts and combinations thereof. In certain embodiments, the composition contains 1,2-benzisothiazolin-3-one or a salt thereof. Biocides of this type include PROXEL® BD20, commercially available from Arch Chemicals, Inc (Atlanta, GA).

When combined with the alkali activator and the solvent the reactive solid component reacts with the alkali activator in a geopolymerization reaction to provide cementitious material. The water-soluble polymer component acts as a plasticizer to reduce the amount of water required in the composition while increasing the workability of the composition and the strength of the final material. When the two components of the composition system described herein are combined, they form a composition comprising a geopolymer component formed from the reaction product of the alkali activator and the aluminosilicate contained in the reactive solid component.

The compositions of the present invention can be suitable for use as mortars, concretes, grouts, mineral foams or coatings.

In one embodiment, the reactive solid may be mixed with the alkali activator and the solvent with the water-soluble polymer plasticizer component added promptly to the mixture. In one embodiment, a reactive solid mixture containing an aluminosilicate and a calcium source, such as metakaolin and blast furnace slag or hydrated lime is prepared while a separate alkali activator solution is prepared using water as a solvent; in this embodiment, the reactive solid mixture can be mixed with the alkali activator and the plasticizing additive may be added to the combined reactive components as a top treat. In another embodiment, the composition of the present invention is prepared by combining the alkali activator and water-soluble polymer component together to form an activating liquid component and then combining the activating liquid component with the reactive solid component. In another embodiment, a reactive solid mixture containing an aluminosilicate and a calcium source, such as metakaolin and blast furnace slag or hydrated lime, may be mixed together with solid alkali silicate; solvent and the plasticizer may be added to this solid mixture separately or sequentially to initiate the reaction of the reactive solid with the alkali silicate. The mixing of the components may be accomplished by any method now known or hereafter developed. For example, mixing tools common in the production of mortars or concretes may be used. The mixed composition may be converted into the desired shape during the time in which it has good formability.

Shaped bodies made from the compositions of the present invention include components of buildings or similar structures, for example shells, walls, floors, or used as a coating or a filling.

The present invention further comprises an article made from the composition described herein. In particular, the present invention provides an article made from a geopolymer, wherein the geopolymer composition is made from (A) a reactive solid comprising an aluminosilicate and a calcium source, (B) an alkali activator, (C) a solvent comprising or consisting of water, in the presence of a plasticizer component. Each of the individual components are as described in detail herein.

In addition, the present invention also provides a method of plasticizing an aluminosilicate geopolymer precursor by combining the reactive solid, with the alkali activator, solvent, and a plasticizing additive. Each of the individual components are described herein in detail.

## EXAMPLES

The following examples provide illustrations of the invention. Example 13 is an inventive example. The other examples are comparative examples. These examples are non-exhaustive and are not intended to limit the scope of the invention.

An Alkali Activator solution was prepared according to the formulation set forth in Table 1 for use in the formulations in Table 2.

**Table 1**

| 50%NaOH (aq) (wt%) | KOH (solid) (wt%) | Colloidal Silica (50% SiO2 (aqueous)) (wt%) | Potassium silicate anhydrous (SiO2: K2O 2.5:1 wt%) (wt%) | water (wt%) |
|---|---|---|---|---|
| 20.1 | 3.3 | 16.3 | 31.6 | 28.8 |

Reactive geopolymer mixtures were prepared according to the formulation set forth in Table 2.

**Table 2**

| Ex. | Formulation type | Metakaolin (wt%) | GGBFS[1] (wt%) | Alkali Activator solution (wt%) | Sand filler[2] (wt%) | Hydrated lime (wt%) |
|---|---|---|---|---|---|---|
| 1a | Paste | 44.2 | 0.0 | 54.0 | 0.0 | 1.8 |
| 1b | Paste repeat 1 | 44.2 | 0.0 | 54.0 | 0.0 | 1.8 |
| 1c | Paste repeat 2 | 44.2 | 0.0 | 54.0 | 0.0 | 1.8 |

(continued)

| Ex. | Formulation type | Metakaolin (wt%) | GGBFS[1] (wt%) | Alkali Activator solution (wt%) | Sand filler[2] (wt%) | Hydrated lime (wt%) |
|---|---|---|---|---|---|---|
| 1d | Paste repeat 3 | 44.5 | 0.0 | 53.8 | 0.0 | 1.8 |
| 1e | Paste repeat 4 | 44.2 | 0.0 | 54.0 | 0.0 | 1.8 |
| 1f | Mortar repeat 5 | 22.4 | 0.0 | 27.4 | 49.3 | 0.9 |
| 2a | Paste | 41.5 | 10.4 | 48.2 | 0.0 | 0.0 |
| 2b | Paste repeat 1 | 41.5 | 10.4 | 48.2 | 0.0 | 0.0 |
| 2c | Mortar repeat 2 | 19.4 | 4.8 | 22.5 | 53.3 | 0.0 |
| 3 | Paste | 44.2 | 0.0 | 54.0 | 0.0 | 1.8 |
| 4a | Paste | 44.2 | 0.0 | 54.0 | 0.0 | 1.8 |
| 4b | Paste repeat 1 | 44.2 | 0.0 | 54.0 | 0.0 | 1.8 |
| 4c | Mortar repeat 2 | 22.4 | 0.0 | 27.4 | 49.3 | 0.9 |
| 5 | Paste | 44.2 | 0.0 | 54.0 | 0.0 | 1.8 |
| 6 | Paste | 44.2 | 0.0 | 54.0 | 0.0 | 1.8 |
| 7 | Paste | 44.2 | 0.0 | 54.0 | 0.0 | 1.8 |
| 8 | Paste | 44.2 | 0.0 | 54.0 | 0.0 | 1.8 |
| 9a | Paste | 44.2 | 0.0 | 54.0 | 0.0 | 1.8 |
| 9b | Paste repeat 1 | 44.2 | 0.0 | 54.0 | 0.0 | 1.8 |
| 9c | Mortar repeat 2 | 22.4 | 0.0 | 27.4 | 49.3 | 0.9 |
| 10 | Paste | 44.2 | 0.0 | 54.0 | 0.0 | 1.8 |
| 11a | Paste | 44.2 | 0.0 | 54.0 | 0.0 | 1.8 |
| 11b | Paste repeat 1 | 44.2 | 0.0 | 54.0 | 0.0 | 1.8 |
| 11c | Mortar repeat 2 | 22.4 | 0.0 | 27.4 | 49.3 | 0.9 |
| 12 | Paste | 44.2 | 0.0 | 54.0 | 0.0 | 1.8 |
| 13a | Paste | 41.5 | 10.4 | 48.2 | 0.0 | 0.0 |
| 13b | Paste repeat 1 | 41.5 | 10.4 | 48.2 | 0.0 | 0.0 |
| 13c | Mortar repeat 2 | 19.4 | 4.8 | 22.5 | 53.3 | 0.0 |
| 14 | Paste | 44.2 | 0.0 | 54.0 | 0.0 | 1.8 |
| 15 | Paste | 44.2 | 0.0 | 54.0 | 0.0 | 1.8 |
| 16 | Paste | 44.2 | 0.0 | 54.0 | 0.0 | 1.8 |
| [1] Ground Granulated Blast Furnace Slag [2] Standardized sand (sieved per ASTM C77820-30) | | | | | | |

The geopolymer compositions formed from the formulations in table 2 have the metal molar rations as set forth in Table 3.

**Table 3**

| Examples | Na: | K: | Ca : | Si : | Al | $H_2O$ / $M_2O$ mol (M = Na,K only) | $H_2O$ / $M_xO$ mol (M = Na, K (x=2 and Ca (x=1)) |
|---|---|---|---|---|---|---|---|
| 1, 3, 4, 5, 6, 7, 8, 9, 10, 11, 12, 14, 15, 16 | 0.37 | 0.37 | 0.06 | 1.81 | 1.00 | 11.0 | 9.5 |
| 2, 13 | 0.33 | 0.33 | 0.19 | 1.81 | 1.00 | 11.0 | 6.9 |

The formulations prepared in Table 3 were top treated with a Plasticizer Polymer Additive as set forth in Table 4.

**Table 4**

| Ex. | Plasticizer Polymer Additive | Plasticizer Polymer Additive Actives (%solids) | Top treat of Plasticizer Polymer Additive Actives (wt%) |
|---|---|---|---|
| 1a | - | - | 0 |
| 1b | - | - | 0 |
| 1c | - | - | 0 |
| 1d | - | - | 0 |
| 1e | - | - | 0 |
| 1f | - | - | 0 |
| 2a | - | - | 0 |
| 2b | - | - | 0 |
| 2c | - | - | 0 |
| 3 | Ultrazine™ NA[1] | 88 | 1.1 |
| 4a | Morwet™ D809[2] | 96.2 | 1.1 |
| 4b | Morwet™ D809 | 96.2 | 1.1 |
| 4c | Morwet™ D809 | 96.2 | 0.6 |
| 5 | Melflux™ 2651 F[3] | 100 | 1.1 |
| 6 | Melflux™ 4930 F[4] | 100 | 1.1 |
| 7 | Polyacrylic acid (7300Mw) | 50 | 1.1 |
| 8 | Polyacrylic acid (2000Mw) | 63 | 1.1 |
| 9a | Sodium 2-acrylamido-2-methylpropane sulfonate (15,000 Mw) | 50 | 1.1 |
| 9b | Sodium 2-acrylamido-2-methylpropane sulfonate (15,000 Mw) | 50 | 1.1 |
| 9c | Sodium 2-acrylamido-2-methylpropane sulfonate (15,000 Mw) | 50 | 0.6 |
| 10 | Sodium 2-acrylamido-2-methylpropane sulfonate (30,000 Mw) | 37 | 1.1 |
| 11a | Sodium neutralised methacrylic acid (5000Mw) | 40 | 1.1 |
| 11b | Sodium neutralised methacrylic acid (5000Mw) | 40 | 1.1 |
| 11c | Sodium neutralised methacrylic acid (5000Mw) | 40 | 0.6 |
| 12 | Sodium neutralised methacrylic acid (30,000Mw) | 30 | 1.1 |
| 13a | Sodium neutralised methacrylic acid (5000Mw) | 40 | 1.3 |
| 13b | Sodium neutralised methacrylic acid (5000Mw) | 40 | 1.3 |
| 13c | Sodium neutralised methacrylic acid (5000Mw) | 40 | 0.6 |
| 14 | Sodium neutralised methacrylic acid (6000Mw) | 89 | 1.1 |
| 15 | Sodium neutralised methacrylic acid (2000Mw) | 89 | 1.1 |
| 16 | Sodium neutralised methacrylic acid (7300Mw) | 45 | 1.1 |
| [1] Ultrazine™ NA is a sodium lignosulfonate polymer commercially available from Borregaard AS.<br>[2] Morwet™ 809 is an alkylnaphthalene sulfonate polymer commercially available from Nouryon.<br>[3] MELFLUX™ 2651 F is a polycarboxylic ether polymer commercially available from BASF.<br>[4] MELFLUX™ 4930 F is a polycarboxylic ether polymer commercially available from BASF. | | | |

The compositions of Table 4 were evaluated for performance attributes as reported in Table 5, where the compositions of Table 4 were used as the Portland cement in the test methods listed.

**Table 5**

| Ex. | Compressive strength (ASTM C109) | | Slump (ASTM C1437) (workability) | | | | Vicat Set (ASTM C191-19) | |
|---|---|---|---|---|---|---|---|---|
| | 28 Day Compressive strength (MPa) | 28 Day Max Compressive strength (MPa) | Initial slump (mm) | 20 min slump (mm) | 40 min slump (mm) | 60 min slump (mm) | Initial set (min) | Final set (min) |
| 1a | | | 88 | | | 10 | | |
| 1b | | | 98 | 86 | 59 | 41 | | |
| 1c | | | 103 | 76 | 71 | 52 | | |
| 1d | | | | | | | 165 | 375 |
| 1e | | | 97 | 66 | 46 | 37 | | |
| 1f | 73 ± 7 | 80 | | | | | | |
| 2a | | | 58 | 45 | 37 | 36 | | |
| 2b | | | | | | | 225 | 300 |
| 2c | 106 ± 10 | 118 | | | | | | |
| 3 | | | 59 | | | 14 | | |
| 4a | | | 66 | | | 20 | | |
| 4b | | | 91 | 82 | 61 | 50 | | |
| 4c | 73.1 ± 1.0 | 74 | | | | | | |
| 5 | | | 21 | | | 7 | | |
| 6 | | | 25 | | | 12 | | |
| 7 | | | 38 | | | 0 | | |
| 8 | | | 35 | | | 5 | | |
| 9a | | | 66 | | | 20@ 50 min | | |
| 9b | | | 79 | 52 | 43 | 33 | | |
| 9c | 70 ± 22 | 85 | | | | | | |
| 10 | | | 95 | 77 | 55 | 42 | | |
| 11a | | | 121 | 136 | 94 | 75 | | |
| 11b | | | | | | | 180 | 360 |
| 11c | 76 ± 6 | 80 | | | | | | |
| 12 | | | 103 | 98 | 81 | 60 | | |
| 13a | | | 107 | 116 | 106 | 99 | | |
| 13b | | | | | | | 240 | 360 |
| 13c | 164 ± 57 | 214 | | | | | | |
| 14 | | | 58 | 34 | 29 | 23 | | |
| 15 | | | 43 | 36 | 37 | 30 | | |
| 16 | | | 77 | 70 | 56 | 39 | | |

As shown in Table 5, geopolymer compositions of the present invention provide the best balance of properties.

It is to be understood that the upper and lower amount, range, and ratio limits set forth herein may be independently combined. Similarly, the ranges and amounts for each element of the invention can be used together with ranges or amounts for any of the other elements.

As used herein, the transitional term "comprising," which is synonymous with "including," "containing," or "characterized by" is inclusive or open-ended and does not exclude additional, un-recited elements or method steps. However, in each recitation of "comprising" herein, it is intended that the term also encompass, as alternative embodiments, the phrases "consisting essentially of" and "consisting of," where "consisting of" excludes any element or step not specified and "consisting essentially of" permits the inclusion of additional un-recited elements or steps that do not materially affect the basic and novel characteristics of the composition or method under consideration.

While certain representative embodiments and details have been shown for the purpose of illustrating the subject invention, it will be apparent to those skilled in this art that various changes and modifications can be made therein without departing from the scope of the subject invention. In this regard, the scope of the invention is to be limited only by the following claims.

**Claims**

1. **A composition** comprising:

   (1) a reactive geopolymer mixture comprising

   (A) a reactive solid comprising an aluminosilicate and a calcium source,
   (B) an alkali activator,
   (C) a solvent comprising or consisting of water, and

   (2) a plasticizer additive comprising a water-soluble polymer component which is a homopolymer or copolymer containing repeat units derived from methacrylic acid or salts thereof, methacrylate, or mixtures thereof,

   wherein the reactive geopolymer mixture has a $H_2O/M_xO$ ratio calculated by (Total Moles of Free or Potentially Released Water in the Geopolymer Composition/(((Total Moles of Li, Na, and/or K)/2) + Total Moles of Ca) of less than 7.

2. The composition of claim 1, wherein the aluminosilicate is selected from the group consisting of metakaolin; calcined clay; fly ash; incineration ash, including but not limited to rice husk, sugarcane leaves ash, palm oil, boiler ash, wastepaper sludge ash, municipal solid waste ash, bottom ash; natural pozzolans; volcanic ash; ground granulated blast furnace slag, from steel or iron; other industrial ground slag, including but not limited to phosphorous, ferronickel, ferrochrome magnesia-iron, copper, nickel, titaniferous; mine tailings or wastes, including but not limited to coal gangue, red mud; zeolite; feldspars; framework aluminosilicates; synthetic glassy precursors, like silicates, aluminates, aluminosilicates; and mixtures thereof.

3. The composition of claim 1, wherein the aluminosilicate comprises at least 10% or at least 50% metakaolin.

4. The composition of any of claims 1 to 3, wherein the calcium source comprises or consists of blast furnace slag or of hydrated lime.

5. The composition of any of claims 1 to 4, wherein the alkali activator component comprises or consists of an alkali silicate.

6. The composition of any of claims 1 to 5, wherein the alkali activator component contains or is derived from colloidal silica, optionally wherein the alkali activator component comprises the reaction product of (a) an alkali metal oxide, an alkali metal hydroxide, an alkali metal carbonate, an alkali metal bicarbonate, alkali metal silicate or mixtures thereof with (b) colloidal silica.

7. The composition of any of claims 1 to 6, wherein:

   (a) the water-soluble polymer component comprises or consists of a salt of a polymer consisting of repeat units derived from methacrylic acid wholly or partially neutralized by lithium, sodium, or potassium or mixtures thereof, wherein the salt optionally includes other divalent ions selected from magnesium or calcium; and/or
   (b) the water-soluble polymer component has a weight average molecular weight measured by aqueous GPC of from 1000 to 40,000 or 1000 to 35,000, or 1000 to 30,000, or 2000 to 20,000, or 3,000 to 10,000.

8. The composition of any of claims 1 to 7, wherein the composition further comprises sand.

9. An article made from the composition of any preceding claim.

10. A method comprising:
plasticizing an aluminosilicate geopolymer precursor mixture by combining (1) a reactive solid mixture comprising an aluminosilicate and a calcium source, (2) an alkali activator, and (3) a solvent comprising or consisting of water, with a plasticizing additive, wherein the plasticizing additive comprises a water-soluble polymer component which is a homopolymer or copolymer containing repeat units derived from methacrylic acid or salts thereof, methacrylate, or mixtures thereof, wherein the geopolymer precursor mixture has a $H_2O/M_2O$ ratio calculated by (Total Moles of Free or Potentially Released Water in the Geopolymer Composition/(((Total Moles of Li, Na, and/or K)/2) + Total Moles of Ca) of less than 7.

11. The method of claim 10, wherein the aluminosilicate is selected from the group consisting of metakaolin; calcined clay; fly ash; incineration ash, including but not limited to rice husk, sugarcane leaves ash, palm oil, boiler ash, wastepaper sludge ash, municipal solid waste ash, bottom ash;, natural pozzolans; volcanic ash; ground granulated blast furnace slag, from steel or iron; other industrial ground slag, including but not limited to phosphorous, ferronickel, ferrochrome magnesia-iron, copper, nickel, titaniferous; mine tailings or wastes, including but not limited to coal gangue, red mud; zeolite; feldspars; framework aluminosilicates; synthetic glassy precursors, like silicates, aluminates, aluminosilicates; and mixtures thereof.

12. The method of any of claims 10 or 11, wherein the calcium source comprises or consists of blast furnace slag or hydrated lime.

13. The method of any of claims 10 to 12, wherein the alkali activator component containing or derived from colloidal silica, optionally wherein the alkali activator component comprises the reaction product of (a) an alkali metal oxide, an alkali metal hydroxide, an alkali metal carbonate, an alkali metal bicarbonate, alkali metal silicate or mixtures thereof with (b) colloidal silica.

14. The method of any of claims 10 to 13, wherein the water-soluble polymer component comprises or consists of a salt of a polymer consisting of repeat units derived from methacrylic acid wholly or partially neutralized by lithium, sodium, or potassium or mixtures thereof, wherein the salt optionally includes other divalent ions selected from magnesium or calcium.

15. The method of any of claims 10 to 14, further comprising the step of adding sand to the geopolymer precursor mixture and plasticizer.

**Patentansprüche**

1. Zusammensetzung, umfassend:

(1) eine reaktive Geopolymermischung, umfassend

(A) einen reaktiven Feststoff, der ein Aluminosilikat und eine Calciumquelle umfasst,
(B) einen Alkaliaktivator,
(C) ein Lösungsmittel, das Wasser umfasst oder aus Wasser zusammengesetzt ist, und

(2) ein Weichmacher-Additiv, umfassend eine wasserlösliche Polymerkomponente, die ein Homopolymer oder Copolymer ist, das Wiederholungseinheiten enthält, die von Methacrylsäure oder Salzen davon, Methacrylat oder Mischungen davon abgeleitet sind,

wobei die reaktive Geopolymermischung ein $H_2O/M_XO$-Verhältnis aufweist, das berechnet wird durch (Gesamtmolzahl an freiem oder potentiell freisetzbarem Wasser in der Geopolymerzusammensetzung/((((Gesamtmolzahl an Li, Na und/oder K)/2) + Gesamtmolzahl an Ca), von weniger als 7.

2. Zusammensetzung nach Anspruch 1, wobei das Aluminosilikat aus der Gruppe bestehend aus Metakaolin; kalziniertem Ton; Flugasche; Verbrennungsasche, einschließlich, aber nicht beschränkt auf Reisschalenasche, Zuckerrohrblätterasche, Palmöl, Kesselasche, Altpapierschlammasche, Siedlungsabfallasche, Bodenasche; natürliche Puzzolane; Vulkanasche; gemahlener granulierter Hochofenschlacke aus Stahl oder Eisen; anderer industrieller Bodenschlacke, einschließlich, aber nicht beschränkt auf phosphorhaltige, Ferronickel-, Ferrochrom-Magnesia-Eisen-, Kupfer-, Nickel-, titanhaltige; Bergbauabgängen oder -abfällen, einschließlich, aber nicht beschränkt auf Kohleberge, Rotschlamm; Zeolith; Feldspäte; Gerüst-Aluminosilikate; synthetische glasartige Vorstufen, wie Silikate, Aluminate, Aluminosilikate; und Mischungen davon ausgewählt ist.

**3.** Zusammensetzung nach Anspruch 1, wobei das Aluminosilikat mindestens 10 % oder mindestens 50 % Metakaolin umfasst.

**4.** Zusammensetzung nach einem der Ansprüche 1 bis 3, wobei die Calciumquelle Hochofenschlacke oder gelöschten Kalk umfasst oder daraus besteht.

**5.** Zusammensetzung nach einem der Ansprüche 1 bis 4, wobei die Alkaliaktivatorkomponente ein Alkalisilikat umfasst oder daraus besteht.

**6.** Zusammensetzung nach einem der Ansprüche 1 bis 5, wobei die Alkaliaktivatorkomponente kolloidales Siliziumdioxid enthält oder davon abgeleitet ist, optional wobei die Alkaliaktivatorkomponente das Reaktionsprodukt von (a) einem Alkalimetalloxid, einem Alkalimetallhydroxid, einem Alkalimetallcarbonat, einem Alkalimetallbicarbonat, Alkalimetallsilikat oder Mischungen davon mit (b) kolloidalem Siliziumdioxid umfasst.

**7.** Zusammensetzung nach einem der Ansprüche 1 bis 6, wobei:

(a) die wasserlösliche Polymerkomponente ein Salz eines Polymers zusammengesetzt aus Wiederholungseinheiten, die von Methacrylsäure abgeleitet sind, die ganz oder teilweise durch Lithium, Natrium oder Kalium oder Mischungen davon neutralisiert ist, umfasst oder daraus besteht, wobei das Salz optional andere zweiwertige Ionen ausgewählt aus Magnesium oder Calcium einschließt; und/oder
(b) die wasserlösliche Polymerkomponente ein Gewichtsmittel des Molekulargewichts, gemessen durch wässrige GPC, von 1000 bis 40.000 oder 1000 bis 35.000 oder 1000 bis 30.000 oder 2000 bis 20.000 oder 3.000 bis 10.000 aufweist.

**8.** Zusammensetzung nach einem der Ansprüche 1 bis 7, wobei die Zusammensetzung ferner Sand umfasst.

**9.** Gegenstand, hergestellt aus der Zusammensetzung nach einem der vorstehenden Ansprüche.

**10.** Verfahren, umfassend:
Weichmachen einer Aluminosilikat-Geopolymer-Vorläufermischung durch Kombinieren von (1) einer reaktiven festen Mischung, die ein Aluminosilikat und eine Calciumquelle umfasst, (2) einem Alkaliaktivator und (3) einem Lösungsmittel, das Wasser umfasst oder aus Wasser zusammengesetzt ist, mit einem weichmachenden Additiv, wobei das weichmachende Additiv eine wasserlösliche Polymerkomponente umfasst, die ein Homopolymer oder Copolymer ist, das Wiederholungseinheiten enthält, die von Methacrylsäure oder deren Salzen, Methacrylat oder Mischungen davon abgeleitet sind, wobei die Geopolymer-Vorläufermischung ein $H_2O/M_2O$-Verhältnis aufweist, das berechnet wird durch (Gesamtmole an freiem oder potentiell freigesetztem Wasser in der Geopolymerzusammensetzung/(((Gesamtmole an Li, Na und/oder K)/2) + Gesamtmole an Ca), von weniger als 7.

**11.** Verfahren nach Anspruch 10, wobei das Aluminosilikat aus der Gruppe bestehend aus Metakaolin; kalziniertem Ton; Flugasche; Verbrennungsasche, einschließlich, aber nicht beschränkt auf Reisschalenasche, Zuckerrohrblätterasche, Palmöl, Kesselasche, Altpapierschlammasche, Siedlungsabfallasche, Bodenasche, natürlichen Puzzolanen; Vulkanasche; gemahlener granulierter Hochofenschlacke aus Stahl oder Eisen; anderer industrieller Bodenschlacke, einschließlich, aber nicht beschränkt auf phosphorhaltige, Ferronickel-, Ferrochrom-Magnesia-Eisen-, Kupfer-, Nickel-, titanhaltige; Bergbauabgängen oder -abfällen, einschließlich, aber nicht beschränkt auf Kohleberge, Rotschlamm; Zeolith; Feldspäte; Gerüst-Aluminosilikate; synthetische glasartige Vorstufen, wie Silikate, Aluminate, Aluminosilikate; und Mischungen davon ausgewählt ist.

**12.** Verfahren nach einem der Ansprüche 10 oder 11, wobei die Calciumquelle Hochofenschlacke oder gelöschten Kalk umfasst oder daraus besteht.

**13.** Verfahren nach einem der Ansprüche 10 bis 12, wobei die Alkaliaktivatorkomponente kolloidales Siliziumdioxid enthält oder davon abgeleitet ist, optional wobei die Alkaliaktivatorkomponente das Reaktionsprodukt von (a) einem Alkalimetalloxid, einem Alkalimetallhydroxid, einem Alkalimetallcarbonat, einem Alkalimetallbicarbonat, Alkalimetallsilikat oder Mischungen davon mit (b) kolloidalem Siliziumdioxid umfasst.

**14.** Verfahren nach einem der Ansprüche 10 bis 13, wobei die wasserlösliche Polymerkomponente ein Salz eines Polymers umfasst oder daraus zusammengesetzt ist, das aus Wiederholungseinheiten zusammengesetzt ist, die von Methacrylsäure abgeleitet sind, die ganz oder teilweise durch Lithium, Natrium oder Kalium oder Mischungen davon neutralisiert ist, wobei das Salz optional andere zweiwertige Ionen einschließt, die aus Magnesium oder Calcium ausgewählt sind.

**15.** Verfahren nach einem der Ansprüche 10 bis 14, ferner umfassend den Schritt des Hinzufügens von Sand zu der Geopolymer-Vorläufermischung und dem Weichmacher.

**Revendications**

**1.** Composition comprenant :

(1) un mélange de géopolymères réactifs comprenant

(A) un solide réactif comprenant un aluminosilicate et une source de calcium,
(B) un activateur alcalin,
(C) un solvant comprenant ou constitué d'eau, et

(2) un additif plastifiant comprenant un composant polymère hydrosoluble qui est un homopolymère ou copolymère contenant des motifs de répétition dérivés d'acide méthacrylique ou de sels de celui-ci, de méthacrylate, ou de mélanges de ceux-ci,

dans laquelle le mélange de géopolymères réactifs a un rapport $H_2O$ /$M_XO$ calculé par (nombre total de moles d'eau libre ou potentiellement libérée dans la composition géopolymère/(((nombre total de moles de Li, Na et/ou K)/2) + nombre total de moles de Ca) inférieur à 7.

**2.** Composition selon la revendication 1, dans laquelle l'aluminosilicate est choisi dans le groupe constitué de métakaolin ; argile calcinée ; cendres volantes ; cendres d'incinération, y compris, sans s'y limiter, balle de riz, cendres de feuilles de canne à sucre, huile de palme, cendres de chaudière, cendres de boues de déchets de papier, cendres de déchets municipaux solides, cendres de fond ; pouzzolanes naturelles ; cendres volcaniques ; laitier de haut fourneau granulé broyé, provenant d'acier ou de fer ; autre laitier broyé industriel, y compris, mais sans s'y limiter, phosphoreux, ferronickel, ferrochrome, magnésie-fer, cuivre, nickel, titanifère ; résidus ou déchets miniers, y compris, mais sans s'y limiter, gangue de charbon, boue rouge ; zéolite ; feldspaths ; aluminosilicates de charpente ; précurseurs vitreux synthétiques, de type silicates, aluminates, aluminosilicates ; et mélanges de ceux-ci.

**3.** Composition selon la revendication 1, dans laquelle l'aluminosilicate comprend au moins 10 % ou au moins 50 % de métakaolin.

**4.** Composition selon l'une quelconque des revendications 1 à 3, dans laquelle la source de calcium comprend ou est constituée de laitier de haut fourneau ou de chaux hydratée.

**5.** Composition selon l'une quelconque des revendications 1 à 4, dans laquelle le composant activateur alcalin comprend ou est constitué d'un silicate alcalin.

**6.** Composition selon l'une quelconque des revendications 1 à 5, dans laquelle le composant activateur alcalin contient ou est dérivé de silice colloïdale, facultativement dans laquelle le composant activateur alcalin comprend le produit de réaction de (a) un oxyde de métal alcalin, un hydroxyde de métal alcalin, un carbonate de métal alcalin, un bicarbonate de métal alcalin, un silicate de métal alcalin ou des mélanges de ceux-ci avec (b) de la silice colloïdale.

**7.** Composition selon l'une quelconque des revendications 1 à 6, dans laquelle :

(a) le composant polymère hydrosoluble comprend ou est constitué d'un sel d'un polymère constitué de motifs de répétition dérivés d'acide méthacrylique complètement ou partiellement neutralisé par lithium, sodium ou potassium ou mélanges de ceux-ci, dans laquelle le sel comporte facultativement d'autres ions divalents choisis parmi magnésium ou calcium ; et/ou

(b) le composant polymère hydrosoluble a une masse moléculaire moyenne en poids mesurée par CPG aqueuse allant de 1000 à 40 000 ou 1000 à 35 000, ou 1000 à 30 000, ou 2000 à 20 000, ou 3000 à 10 000.

8. Composition selon l'une quelconque des revendications 1 à 7, dans laquelle la composition comprend en outre du sable.

9. Article fabriqué à partir de la composition selon l'une quelconque revendication précédente.

10. Procédé comprenant :

la plastification d'un mélange précurseur de géopolymère d'aluminosilicate en combinant (1) un mélange solide réactif comprenant un aluminosilicate et une source de calcium, (2) un activateur alcalin, et (3) un solvant comprenant ou constitué d'eau, avec un additif plastifiant, dans lequel l'additif plastifiant comprend un composant polymère hydrosoluble qui est un homopolymère ou copolymère contenant des motifs de répétition dérivés d'acide méthacrylique ou de sels de celui-ci, de méthacrylate, ou de mélanges de ceux-ci, dans lequel le mélange précurseur de géopolymère a un rapport $H_2O$ /$M_2O$ calculé par (nombre total de moles d'eau libre ou potentiellement libérée dans la composition géopolymère/(((nombre total de moles de Li, Na et/ou K)/2) + nombre total de moles de Ca) inférieur à 7.

11. Procédé selon la revendication 10, dans lequel l'aluminosilicate est choisi dans le groupe constitué de métakaolin ; argile calcinée ; cendres volantes ; cendres d'incinération, y compris, sans s'y limiter, balle de riz, cendres de feuilles de canne à sucre, huile de palme, cendres de chaudière, cendres de boues de déchets de papier, cendres de déchets municipaux solides, cendres de fond ;pouzzolanes naturelles ; cendres volcaniques ; laitier de haut fourneau granulé broyé, provenant d'acier ou de fer ; autre laitier broyé industriel, y compris, mais sans s'y limiter, phosphoreux, ferronickel, ferrochrome, magnésie-fer, cuivre, nickel, titanifère ; résidus ou déchets miniers, y compris, mais sans s'y limiter, gangue de charbon, boue rouge ; zéolite ; feldspaths ; aluminosilicates de charpente ; précurseurs vitreux synthétiques, de type silicates, aluminates, aluminosilicates ; et mélanges de ceux-ci.

12. Procédé selon l'une quelconque des revendications 10 ou 11, dans lequel la source de calcium comprend ou est constituée de laitier de haut fourneau ou de chaux hydratée.

13. Procédé selon l'une quelconque des revendications 10 à 12, dans lequel le composant activateur alcalin contient ou est dérivé de silice colloïdale, facultativement dans lequel le composant activateur alcalin comprend le produit de réaction de (a) un oxyde de métal alcalin, un hydroxyde de métal alcalin, un carbonate de métal alcalin, un bicarbonate de métal alcalin, un silicate de métal alcalin ou des mélanges de ceux-ci avec (b) de la silice colloïdale.

14. Procédé selon l'une quelconque des revendications 10 à 13, dans lequel le composant polymère hydrosoluble comprend ou est constitué d'un sel d'un polymère constitué de motifs de répétition dérivés d'acide méthacrylique complètement ou partiellement neutralisé par lithium, sodium ou potassium ou mélanges de ceux-ci, dans lequel le sel comporte facultativement d'autres ions divalents choisis parmi magnésium ou calcium.

15. Procédé selon l'une quelconque des revendications 10 à 14, comprenant en outre l'étape consistant à ajouter du sable au mélange précurseur de géopolymère et un plastifiant.

### REFERENCES CITED IN THE DESCRIPTION

**Patent documents cited in the description**

- CA 3040162 A1

- WO 2020191444 A1

**Non-patent literature cited in the description**

- **WELDES** ; **LANGE**. Properties of Soluble Silicates. *Industrial and Engineering Chemistry*, April 1969, vol. 61 (4)